# FASCICULE DE BREVET EUROPEEN

(11) **EP 1 402 212 B1**
(45) Date de publication et mention de la délivrance du brevet: **21.11.2012**
(21) Numéro de dépôt: 02748963.2
(22) Date de dépôt: 19.06.2002
(51) Int. Cl.: F16L 37/14, B60T 13/567

(54) **SERVOMOTEUR PNEUMATIQUE D'ASSISTANCE DE FREINAGE MUNI D'UNE TIGE DE COMMANDE ET PROCEDE DE MONTAGE**
PNEUMATISCHER BREMSKRAFTVERSTÄRKER MIT EINEM BETÄTIGUNGSGESTÄNGE SOWIE ENTSPRECHENDES MONTAGEVERFAHREN
PNEUMATIC BRAKE BOOSTER PROVIDED WITH A CONTROL ROD AND METHOD FOR MOUNTING SAME

(30) Priorité: 21.06.2001 FR 0108306
(43) Date de publication de la demande: 31.03.2004
(73) Titulaire: ROBERT BOSCH GMBH, 70442 Stuttgart (DE)
(72) Inventeur: RICHARD, Philippe, F-77500 Chelles (FR); CASTELLO, Olivier, F-93140 Bondy (FR); LACROIX, Stéphane, F-77220 Tournan en Brie (FR); DIVOUX, Cyril, F-77184 Emerainville (FR)
(86) Numéro de dépôt international: PCT/FR2002/002117
(87) Numéro de publication internationale: WO 2003/004923

(56) Documents cités:
- FR-A- 2 784 954
- US-A- 4 453 747

## Description

L'invention se rapporte à un servomoteur pneumatique d'assistance de freinage muni d'une tige de commande. L'invention a également pour objet un procédé de montage de ce servomoteur. Le but de l'invention est de faciliter le montage d'un tel servomoteur pneumatique situé dans le compartiment moteur d'un véhicule et de le relier par l'intermédiaire d'une tige de commande à une pédale de frein située dans l'habitacle d'un véhicule.

Un servomoteur pneumatique comme décrit dans le document FR2784954 est un boîtier en tôle généralement emboutie, monté sur un tablier entre une pédale de frein et un maître cylindre d'un circuit hydraulique de freinage. Un tablier est une paroi rigide qui sépare le compartiment moteur de l'habitacle. La pédale de frein est reliée à une tige de commande. La tige de commande pénètre dans le boîtier. Alors que le boîtier est maintenu fixe par rapport au tablier, la tige de commande se déplace longitudinalement à son axe sensiblement perpendiculairement au tablier.

Du fait de la présence du tablier, le montage du servomoteur et de sa liaison mécanique à la pédale de frein du véhicule peut nécessiter l'intervention de deux opérateurs, l'un tenant la pédale de frein du côté habitacle, l'autre tenant le servomoteur ou la tige de commande du côté compartiment moteur. Lors du montage, le servomoteur est fixé à la pédale de frein par fixation, par exemple par une goupille de liaison de la tige de commande à la pédale de frein, ou éventuellement par vissage. Cette manoeuvre nécessite d'accoler précisément cette tige de commande et une extrémité de la pédale de frein. Un tel assemblage est délicat car il doit se pratiquer alors que les deux pièces sont par ailleurs présentées de part et d'autre du tablier, au travers d'un petit trou destiné à laisser coulisser la tige de commande seule.

De plus, du fait de l'assemblage de plusieurs éléments dans un système, par exemple la tige de commande à une pédale de frein, des jeux entre deux éléments peuvent apparaître. L'accumulation de ces jeux, entraîne non seulement des nuisances sonores désagréables pour le conducteur, mais également une course morte préjudiciable à une action immédiate de freinage ainsi qu'une mauvaise cohésion à plus long terme de tous ces éléments.

Pour simplifier et améliorer le montage de la tige de commande à la pédale de frein, l'invention a pour but, tout d'abord, de monter le servomoteur dans le compartiment moteur puis de fixer la tige de commande avec un autre dispositif de fixation que celui correspondant à la fixation malaisée avec une goupille. Pour cela, la tige de commande est réalisée en deux parties destinées à être alignées et maintenues rigidement l'une dans l'autre. La première partie est reliée au boîtier du servomoteur. La deuxième partie est reliée à la pédale de frein côté habitacle du véhicule. La première partie comporte un adaptateur. Cet adaptateur comporte principalement un mécanisme à engagement élastique connu sous le nom de « clip » réalisé par exemple par une épingle. Un tel engagement permet en outre une liaison simple et un montage en aveugle du fait de la présence d'un guide conique d'engagement sur la première partie et du fait de la présence d'un plongeur sur la deuxième partie. La longueur du plongeur est telle qu'elle permet d'éviter de perdre la liaison en cas de perte ou de rupture de la liaison d'assemblage des deux parties entre elles. Pour empêcher l'effet réversible de ce mécanisme à engagement élastique, on prévoit de le bloquer par une épingle. Les deux bras de l'épingle sont maintenus en extension dans une gorge circulaire trapézoïdale de la tige de commande. Ces deux parties s'encastrent ainsi de manière stable, sans jeu, l'une dans l'autre par l'intermédiaire de ce dispositif de blocage. De tels systèmes defixation sont décrits dans le document US 4 453 741.

Dans l'invention on supprime ainsi les jeux de fixation. En effet, le dispositif élastique d'accrochage comporte sur une des faces de la gorge circulaire un plan oblique contre lequel se loge l'épingle. Cette face oblique permet à l'épingle de se caler en supprimant les jeux. L'encastrement devient alors plus rigide.

L'invention a donc pour objet un servomoteur pneumatique d'assistance de freinage comportant
- une tige de commande,
   caractérisé en ce que la tige de commande comporte
- deux parties séparables et encastrables l'une dans l'autre, et
- un dispositif à blocage élastique de l'encastrement pour maintenir rigidement les deux parties l'une dans l'autre. Ce blocage est ainsi réalisé sans jeu après montage.

L'invention a également pour objet un servomoteur pneumatique d'assistance de freinage comportant
- une tige de commande,
   caractérisé en ce que la tige de commande comporte
- un premier et un second éléments séparables et encastrables l'un dans l'autre, le premier élément étant muni d'un logement de réception d'une extrémité du second élément,
- un dispositif élastique d'accrochage du second élément dans le premier élément.

L'invention a également pour objet un procédé de montage d'un servomoteur dans un habitacle d'un véhicule dans lequel on fixe le servomoteur à un tablier séparant un compartiment moteur de l'habitacle de ce véhicule caractérisé en ce qu'il comporte les étapes suivantes
- on réalise une tige de commande du servomoteur en deux parties destinées à être maintenues rigidement l'une dans l'autre.
- on engage une première partie de la tige de commande dans le servomoteur avant la fixation du servomoteur au tablier,
- on engage une deuxième partie de la tige de commande dans la première partie de la tige de commande à partir de l'habitacle.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

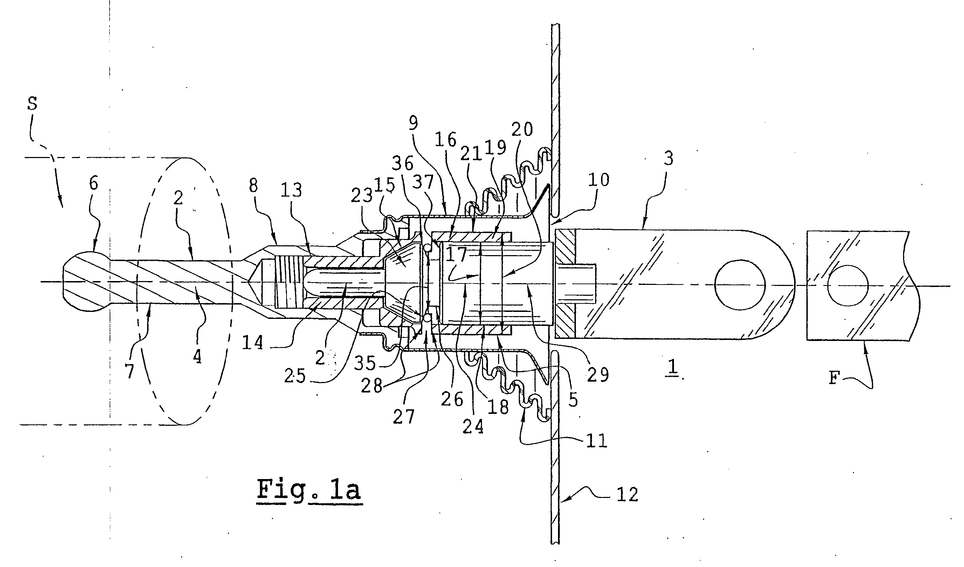

- Figure 1a : Une représentation schématique du dispositif de fixation d'une tige de commande de l'invention vue en coupe ;

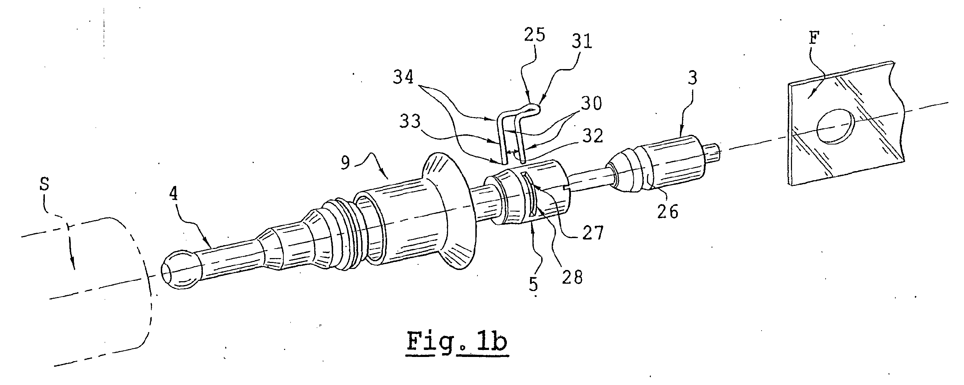

- Figure 1b : Une représentation schématique du dispositif de fixation détaillée d'une tige de commande de l'invention vue dans l'espace.

La figure 1a montre un servomoteur S pneumatique d'assistance de freinage (très schématiquement représenté) muni d'une tige de commande 1. Selon l'invention, la tige de commande 1 comporte deux éléments 2 et 3 séparables et encastrables l'un dans l'autre. La première partie 2 est directement liée au servomoteur S. La deuxième partie 3 est directement reliée à une pédale de frein F.

La première partie 2 comporte, dans l'exemple, une tige à rotule 4 et un adaptateur 5. La tige à rotule 4 a une forme cylindrique globalement conique. La tige à rotule 4 comporte trois sections. Elle possède à son extrémité en relation avec le servomoteur S une première section de forme arrondie 6 en rotule se prolongeant par une section tubulaire 7 et se terminant par une section tubulaire globalement conique 8 dont le diamètre s'agrandit dans la direction de la pédale de frein F. Les deux premières sections 6 et 7 sont pleines alors que la troisième section 8 est creuse. Un cône 9 en tôle est serti sur la dernière section élargie 8 de la tige à rotule 4. Ce cône 9 possède également une ouverture 10 élargie dans la direction de la pédale de frein F. Ce cône 9 d'entrée permet le passage de l'adaptateur 5 et sert d'appui à un soufflet 11. Le soufflet 11 anti-courants d'air s'étend jusqu'à un tablier 12 du véhicule. La face interne 13 de la section tubulaire conique 8 de la tige à rotule 4 possède un pas de vis femelle. L'adaptateur 5 possède un pas de vis mâle complémentaire. Le pas de vis de la tige à rotule 4 permet à l'adaptateur 5 de se visser et d'occuper en profondeur une position adaptée aux tolérances de fabrication des véhicules et en particulier aux positions des pédales de frein F. Bien que l'adaptateur 5 soit aussi une variante préférée de l'invention, il est tout à fait envisageable de s'en passer et de réaliser la partie 2 de la tige de commande 1 d'une manière monobloc.

L'adaptateur 5 comporte trois sections successives, les sections 14, 15 et 16. La section 14 est située du côté du servomoteur S. La section 16 est située du côté de la pédale de frein F. Les deux sections 14 et 16 sont reliées par une section 15 conique. L'adaptateur 5 a ainsi une forme cylindrique externe globalement conique épousant la forme creuse de la section tubulaire conique 8 de la première partie 2 de la tige de commande 1. La forme de l'adaptateur 5 est telle qu'elle peut ainsi s'emboîter par vissage de la section 14 dans la section conique 8 de la tige à rotule 4. L'adaptateur 5 est creux. A l'endroit de la section 16, un diamètre interne 17 de l'adaptateur 5 délimite une face interne 18 d'une paroi 19 de l'adaptateur 5, et un diamètre externe 20 en délimite la face externe 21. Ces deux diamètres 17 et 20 évoluent le long de l'adaptateur avec la forme cylindrique globalement conique de l'adaptateur 5. La section 14 est tubulaire et creuse et possède le plus petit diamètre interne en direction du servomoteur S. La face externe 21 de la section 14 possède des pas de vis permettant à l'adaptateur 5 d'être vissé à l'intérieur de la section tubulaire conique 8 de la tige à rotule 4. Pour maintenir cette liaison sans risque de dévissage, l'adaptateur 5, une fois vissé, est collé dans la section tubulaire 8. La colle utilisée est par exemple du type frein filet notamment du type verrouillage à sec, éventuellement une colle au cyanocrylate.

La deuxième partie 3 de la tige de commande 1 comporte trois sections successives pleines, les sections 22, 23 et 24. La section 22 est située du côté du servomoteur S. La section 24 est située du côté de la pédale de frein F. Les deux sections 22 et 24 sont reliées entre elles par une section 23 conique. La deuxième partie 3 de la tige de commande 1 a aussi une forme cylindrique externe globalement conique épousant la forme creuse de l'adaptateur 5 de la première partie 2 de la tige de commande 1. La section 22 a une forme allongée de diamètre constant appelée plongeur. Le plongeur 22 permet de stabiliser l'ensemble de la tige de commande 1. La section 22 comporte un plus petit diamètre que la section 24. La section 22 est prolongée par le tronçon conique 23 puis par la section 24 de forme allongée.

L'encastrement rigide des deux parties 2 et 3 entre elles nécessite que ces deux parties puissent être bloquées de façon stable. Pour cela, le dispositif d'accrochage de l'invention comporte un dispositif élastique d'accrochage. Ce dispositif d'accrochage dans un exemple, comporte une goupille 25 glissée dans la première partie 2 de la tige de commande 1 et engagée dans la deuxième partie 3 de la tige de commande 1. La goupille 25 est réalisée sous la forme d'une épingle 25, figure 1b, fixée sur l'adaptateur 5. Le moyen pour recevoir cette goupille dans la deuxième partie 3 est une gorge circulaire 26 située sur la face externe de la deuxième partie 3 de la tige de commande 1.

La goupille 25 du dispositif d'accrochage est montée sur l'adaptateur 5. Pour ce faire, la figure 1a montre que l'adaptateur 5 possède à la jonction du tronçon conique 15 et de la section 16 deux rainures transversales 27. Ces deux rainures transversales 27 débouchent à l'intérieur de l'adaptateur 5. La figure 1b montre que les rainures transversales 27 sur l'adaptateur 5 sont de petits arcs de cercle transversaux. Ces petits arcs de cercle sont réalisés sur une petite distance de telle manière qu'ils ne se rejoignent pas. Ils délimitent sur leurs chants deux rebords droits 28, perpendiculaires, à l'axe 29 de la tige de commande 1.

L'épingle 25 est une tige souple et flexible pliée en deux à l'endroit de son milieu et forme deux bras 30 reliés par une boucle 31. Les deux bras 30 sont parallèles. L'épingle 25 est en outre repliée à 90°, environ au tiers de sa longueur, à l'endroit où se trouve la boucle 31 dans un plan perpendiculaire au plan contenant les deux bras parallèles. La distance 32 à vide qui sépare les deux bras 30 dans une portion moyenne 33 au milieu des bras est inférieure au diamètre interne 17 de l'adaptateur 5 dans sa section 16 et dans le fond de la gorge 26 de la section 24 de la deuxième partie 3 de la tige de commande 1. La longueur des deux bras 30 de l'épingle 25 doit être au moins aussi grande que le diamètre externe 20 de l'adaptateur 5 dans sa section 16.

Lorsque la goupille 25 est insérée dans les rainures 27, les extrémités 34 des bras 30 reposent contre un des deux rebords 28 des rainures 27 du côté du servomoteur S alors que la portion moyenne 33 de cette épingle 25 se trouve dans le vide délimité par la paroi interne 18 de l'adaptateur 5 dans sa partie la plus large 16. A l'endroit de cette portion moyenne 33 lorsqu'elle est dans les rainures 27, la distance entre les deux bras 30 de l'épingle 25 est légèrement plus grande que la distance à vide 32. Cette distance plus grande 35 est cependant plus faible que le diamètre interne 17 de l'adaptateur 5 dans sa partie 16 et dans le fond de la gorge 26. Cette distance 35 résulte de l'extension forcée des bras 30 lors de leur insertion dans les rainures 27. Du fait de la souplesse et de la flexibilité de la tige repliée 25, les bras 30 réalisent ainsi un rétrécissement élastique s'engageant dans l'adaptateur 5 au niveau des deux rainures 27. De ce fait, les bras 30 sont maintenus en extension dans la gorge trapézoïdale 26.

Le pliage de l'épingle 25 a pour effet de maintenir en position, par le cône 9, le bout replié comportant la boucle 31 de l'épingle 25, une fois engagée dans les rainures 27.

La goupille 25 de la section 16 de l'adaptateur 5 permet à la deuxième partie 3 de la tige de commande 1 de s'encastrer élastiquement. Le moyen élastique pour recevoir la goupille 25 dans la deuxième partie 3 est la gorge circulaire 26 située sur la section 24 de la deuxième partie 3 de la tige de commande 1. Cette gorge 26 est située entre la section conique 23 et la section tubulaire 24, au début de cette section tubulaire 24. Cette gorge 26 possède deux rebords 36 et 37. De préférence le profil de la gorge est trapézoïdal. Le rebord 36 se trouvant du côté du servomoteur S possède une face d'appui inclinée en direction du servomoteur S par rapport à la normale à cette tige de commande 1. L'autre rebord 37 est perpendiculaire à l'axe 29 de la tige de commande 1.

Dans cette position, les deux bras 30 permettent de maintenir la liaison sans jeux. En effet, si la section 23 conique s'engageait plus avant dans l'adaptateur 5, le bord incliné 36 se déplacerait vers la tige à rotule 4 et les bras 30 se resserraient vers l'axe 29, rattrapant automatiquement le jeu qui aurait permis l'avancée de la section conique 23.

Ainsi, lorsque la deuxième partie 3 de la tige de commande 1 s'encastre dans la première partie 2, le plongeur 22 de la deuxième partie 3 se dirige dans l'espace délimité par le cône d'entrée 10 de la première partie 2 et s'insère dans la partie 16 de l'adaptateur 5. La longueur du plongeur 22 et l'ouverture élargie 10 du cône 9 permettent un montage en aveugle du dispositif élastique d'accrochage. La longueur du plongeur 22 est en outre définie de manière à conserver, en cas de rupture de la fixation, la liaison avec la partie 2 reliée directement au servomoteur S. De ce fait, les parties 2 et 3 encastrables possèdent des profondeurs d'encastrement telles que ces deux parties ne se désolidarisent pas en cas de rupture de la fixation de la tige de commande 1. En même temps, la section 24 glisse le long de la face interne 18 de la paroi 19 de l'adaptateur 5. La partie conique 23 butte contre la goupille 25 et force l'écartement des bras 30 de l'épingle 25 jusqu'à ce que ces bras se referment dans la gorge 26. En effet, comme indiqué précédemment, les bras 30 subissent une extension d'écartement lorsqu'ils sont logés dans les rainures 27, et également au moment de l'encastrement lorsqu'ils sont écartés par la partie conique 23 de la deuxième partie 3 de la tige de commande 1. La paroi 19 de l'adaptateur 5 doit être au moins aussi large que la distance nécessaire à l'écartement des deux bras 30 de l'épingle 25 au moment du passage de la deuxième partie 3. Lorsque les deux bras 30 tombent dans la gorge 26, la deuxième partie 3 de la tige de commande 1 est bloquée rapidement dans l'adaptateur 5.

Si les bords 36 et 37 de la gorge 26 étaient droits, les bras 30 de l'épingle 25 viendraient butter d'un bord à l'autre de chaque rainure 27 du fait de la présence d'un jeu d'insertion. La liaison hocherait ainsi à chaque freinage, ou défreinage. Des jeux supplémentaires apparaîtraient alors. Pour éviter ces jeux supplémentaires, les bras 30 de l'épingle 25 sont calés entre la face oblique 36 de la gorge trapézoïdale 26 de la deuxième partie 3 de la tige de commande 1 et le bord droit 28 des rainures 27. Lorsque le conducteur appuie sur la pédale de frein F, les bras 30 de l'épingle 25 sont progressivement poussés vers le fond de la gorge 26 et ne peuvent plus s'écarter.

Comme il a été précisé précedemment, les bras 30 de l'épingle 25 tombent dans la gorge 26 au passage de la section 23 de la tige de commande 1. Le resserrement des bras 30 vers l'axe 29 de la tige de commande 1 est arrêté par la position en enfoncement de la section 23 dans la section 15 et par le bord droit 28 des rainures 27. L'écartement des bras 30 en sens inverse est limité par des forces de frottement. Les forces de frottement sont le résultat de l'appui des bras 30 de l'épingle 25 sur la face oblique 36 de la gorge 26. Ce sont ces forces de frottement qui atténuent les jeux. Ces forces de frottement sont proportionnelles au degré d'inclinaison de la face oblique 36 de la gorge 26 et par le bord droit 28 des rainures 27 du côté de la pédale de frein F. Elles sont d'autant plus importantes que le plan d'inclinaison de la face 36 est proche d'un axe perpendiculaire à l'axe 29 de la tige de commande 1. L'inclinaison de la face oblique 36 est le résultat d'un compromis entre une plus grande irréversibilité du montage et une plus grande tolérance de rattrapage de jeu.

## Revendications

1. Servomoteur pneumatique (S) d'assistance de freinage comportant
- une tige de commande (1) comportant
un premier et un second élément (2,3) séparables et encastrables l'un dans l'autre, le premier élément étant muni d'un logement de réception d'une extrémité du second élément, et un dispositif élastique d'accrochage du second élément au premier élément
**caractérisé en ce que** la première partie (2) de la tige de commande (1) est en deux parties (4 et 5) et comporte
- un cylindre globalement conique ou adaptateur (5), et
une tige à rotule (4) se terminant par un cône d'entrée (9) pour recevoir l'adaptateur (5).

2. Servomoteur (S) selon la revendication 1, **caractérisé en ce que** le moyen élastique comporte une épingle (25) souple de liaison rapide.

3. Servomoteur (S) selon les revendications 1 et 2, **caractérisé en ce que** ledit dispositif élastique d'accrochage du second élément au premier élément comporte
- un cylindre globalement conique creux épousant la forme de l'extrémité d'une deuxième partie (3) de la tige de commande (1),
- des moyens pour recevoir une épingle souple.

4. Servomoteur (S) selon la revendication 3, **caractérisé en ce que** les moyens pour recevoir l'épingle souple comportent
- dans le cylindre globalement conique creux épousant la forme de l'extrémité d'une deuxième partie (3) de la tige de commande (1) deux rainures transversals (27).

5. Servomoteur (S) selon l'une des revendications 1 à 4, **caractérisé en ce que** l'épingle (25) est une tige pliée en deux et repliée à 90° au tiers par rapport à la boucle formée.

6. Servomoteur (S) selon l'une des revendications 1 à 5, **caractérisé en ce que** l'épingle (25) se loge dans deux rainures transversales (27) du cylindre globalement conique de la première partie (2) de la tige de commande (1).

7. Servomoteur (S) selon la revendication 1 **caractérisé en ce que** l'adaptateur (5) est vissé et/ou collé en position réglable dans la tige à rotule (4).

8. Servomoteur (S) selon l'une des revendications 1 à 7, **caractérisé en ce que** la deuxième partie (3) de la tige de commande (1) comporte une gorge circulaire (26) dont une face d'appui (36) pour le dispositif d'accrochage élastique est inclinée par rapport à la normale à cette tige de commande.

9. Servomoteur (S) selon l'une des revendications 1 à 8, **caractérisé en ce que** la liaison entre les deux parties (2 et 3) forme une liaison sans jeu après montage par la présence d'une gorge (26) trapézoïdale dans la tige de commande (1).

10. Servomoteur (S) selon l'une des revendications 1 à 9, **caractérisé en ce que** les parties encastrables (2 et 3) possèdent des parties coniques pour permettre un montage en aveugle.

11. Servomoteur (S) selon l'une des revendications 1 à 10, **caractérisé en ce que** les parties encastrables (2 et 3) possèdent des profondeurs d'encastrement telles que ces deux parties (2 et 3) ne se désolidarisent pas en cas de rupture de la fixation de la tige de commande (1).

12. Servomoteur (S) selon l'une des revendications 1 à 11, **caractérisé en ce que** le dispositif d'accrochage comporte des moyens pour résister à l'arrachement des deux parties (2 et 3) de la tige de commande (1).

13. Procédé de montage d'un servomoteur (S) dans un habitacle d'une véhicule dans lequel on fixe le servomoteur à un tablier (12) séparant un compartiment moteur de l'habitacle de ce véhicule **caractérisé en ce qu'**il comporte les étapes suivantes :
- on réalise une tige de commande (1) du servomoteur (S) en deux parties (2 et 3) destinées à être maintenues rigidement l'une dans l'autre,
- on engage une première partie (2) de la tige de commande (1) dans le servomoteur avant la fixation du servomoteur au tablier,
- on engage une deuxième partie (3) de la tige de commande (1) dans la première partie (2) de la tige de commande à partir de l'habitacle.

14. Procédé selon la revendication 13 **caractérisé en ce qu'**il comporte une étape dans laquelle
- la deuxième partie (3) de la tige de commande est préalablement fixée à une pédale de frein dans l'habitacle.

## Claims

1. Pneumatic brake booster (S) comprising
- a control rod (1) comprising a first and a second element (2, 3) which are separable and can be nested one inside the other, the first element being equipped with a housing to house one end of the second element, and an elastic device for attaching the second element to the first element, **characterized in that** the first portion (2) of the control rod (1) is made in two portions (4 and 5) and comprises
- a cylinder which is conical overall or adapter (5), and
- a ball-ended rod (4) ending in an inlet cone (9) for accommodating the adapter (5).

2. Booster (S) according to Claim 1, **characterized in that** the elastic means comprises a flexible quick-connection spring clip (25).

3. Booster (S) according to Claims 1 and 2, **characterized in that** the said elastic device for attaching the second element to the first element comprises
- a cylinder which is hollow and conical overall, matching the shape of the end of a second portion (3) of the control rod (1),
- means for accommodating a flexible spring clip.

4. Booster (S) according to Claim 3, **characterized in that** the means for accommodating the flexible spring clip comprise
- in the cylinder which is hollow and conical overall matching the shape of the end of a second portion (3) of the control rod (1), two transverse slots (27).

5. Booster (S) according to one of Claims 1 to 4, **characterized in that** the spring clip (25) is a rod bent in two and folded at 90° one-third of the way along from the loop formed.

6. Booster (S) according to one of Claims 1 to 5, **characterized in that** the spring clip (25) is housed in two transverse slots (27) of the overall conical cylinder of the first portion (2) of the control rod (1).

7. Booster (S) according to Claim 1, **characterized in that** the adapter (5) is screwed and/or bonded in an adjustable position into the ball-ended rod (4).

8. Booster (S) according to one of Claims 1 to 7, **characterized in that** the second portion (3) of the control rod (1) comprises a circular groove (26) of which a bearing face (36) for the elastic attachment device is inclined with respect to the normal to this control rod.

9. Booster (S) according to one of Claims 1 to 8, **characterized in that** the connection between the two portions (2 and 3) forms a play-free connection after mounting as a result of the presence of a trapezoidal groove (26) in the control rod (1).

10. Booster (S) according to one of Claims 1 to 9, **characterized in that** the nesting portions (2 and 3) have conical portions to allow blind mounting.

11. Booster (S) according to one of Claims 1 to 10, **characterized in that** the nesting portions (2 and 3) have nesting depths such that these two portions (2 and 3) do not become detached if the attachment of the control rod (1) breaks.

12. Booster (S) according to one of Claims 1 to 11, **characterized in that** the attachment device comprises means for resisting the pulling-out of the two portions (2 and 3) of the control rod (1).

13. Method for mounting a booster (S) in a cabin of a vehicle in which the booster is fixed to a bulkhead (12) separating an engine compartment from the cabin of this vehicle, **characterized in that** it comprises the following steps:
- a control rod (1) of the booster (S) is made in two portions (2 and 3) intended to be held rigidly one inside the other,
- a first portion (2) of the control rod (1) is engaged in the booster before the booster is secured to the bulkhead,
- a second portion (3) of the control rod (1) is engaged in the first portion (2) of the control rod from the cabin.

14. Method according to Claim 13, **characterized in that** it comprises a step in which
- the second portion (3) of the control rod is fixed to a brake pedal in the cabin beforehand.

## Patentansprüche

1. Pneumatischer Servomotor (S) zur Bremskraftverstärkung, der Folgendes aufweist
- eine Steuerstange (1), die Folgendes aufweist ein erstes und ein zweites trennbares Element (2, 3), die ineinandergefügt werden können, wobei das erste Element mit einer Aufnahme für ein Ende des zweiten Elements versehen ist, und eine elastische Befestigungsvorrichtung des zweiten Elements am ersten Element
**dadurch gekennzeichnet, dass** der erste Teil (2) der Steuerstange (1) aus zwei Teilen (4 und 5) besteht und Folgendes aufweist
- einen global kegeligen Zylinder oder Adapter (5), und
- eine Kugelgelenkstange (4), die in einem Eingangskegel (9) zur Aufnahme des Adapters (5) endet.

2. Servomotor (S) nach Anspruch 1, **dadurch gekennzeichnet, dass** die elastische Einrichtung eine biegsame Nadel (25) zur schnellen Verbindung aufweist.

3. Servomotor (S) nach den Ansprüchen 1 und 2, **dadurch gekennzeichnet, dass** die elastische Befestigungsvorrichtung des zweiten Elements am ersten Element Folgendes aufweist
- einen global kegeligen Hohlzylinder, der die Form des Endes eines zweiten Teils (3) der Steuerstange (1) annimmt,
- Einrichtungen, um eine biegsame Nadel aufzunehmen.

4. Servomotor (S) nach Anspruch 3, **dadurch gekennzeichnet, dass** die Einrichtungen zur Aufnahme der biegsamen Nadel Folgendes aufweisen
- im global kegeligen Hohlzylinder, der die Form des Endes eines zweiten Teils (3) der Steuerstange (1) annimmt, zwei Querrillen (27).

5. Servomotor (S) nach einem der Ansprüche 1 bis 4, **dadurch gekennzeichnet, dass** die Nadel (25) eine einmal umgefaltete und um 90° im Drittel bezüglich der geformten Schlaufe umgebogene Stange ist.

6. Servomotor (S) nach einem der Ansprüche 1 bis 5, **dadurch gekennzeichnet, dass** die Nadel (25) in zwei Querrillen (27) des global kegeligen Hohlzylinders des ersten Teils (2) der Steuerstange (1) untergebracht wird.

7. Servomotor (S) nach Anspruch 1, **dadurch gekennzeichnet, dass** der Adapter (5) in einstellbarer Stellung in die Kugelgelenkstange (4) geschraubt und/oder geklebt wird.

8. Servomotor (S) nach einem der Ansprüche 1 bis 7, **dadurch gekennzeichnet, dass** der zweite Teil (3) der Steuerstange (1) eine Ringnut (26) aufweist, von der eine Auflageseite (36) für die elastische Befestigungsvorrichtung zur Normalen zu dieser Steuerstange geneigt ist.

9. Servomotor (S) nach einem der Ansprüche 1 bis 8, **dadurch gekennzeichnet, dass** die Verbindung zwischen den zwei Teilen (2 und 3) eine Verbindung ohne Spiel nach der Montage durch das Vorhandensein einer trapezförmigen Nut (26) in der Steuerstange (1) bildet.

10. Servomotor (S) nach einem der Ansprüche 1 bis 9, **dadurch gekennzeichnet, dass** die ineinanderfügbaren Teile (2 und 3) kegelige Teile aufweisen, um eine Blindmontage zu erlauben.

11. Servomotor (S) nach einem der Ansprüche 1 bis 10, **dadurch gekennzeichnet, dass** die ineinanderfügbaren Teile (2 und 3) derartige Einfügungstiefen aufweisen, dass diese zwei Teile (2 und 3) sich im Fall eines Bruchs der Befestigung der Steuerstange (1) nicht voneinander lösen.

12. Servomotor (S) nach einem der Ansprüche 1 bis 11, **dadurch gekennzeichnet, dass** die Befestigungsvorrichtung Einrichtungen aufweist, um gegenüber dem Abreißen der zwei Teile (2 und 3) der Steuerstange (1) fest zu sein.

13. Verfahren zur Montage eines Servomotors (S) in einem Fahrzeuginnenraum eines Fahrzeugs, bei dem der Servomotor an einer Rückwand (12) befestigt wird, die ein Motorabteil vom Fahrzeuginnenraum dieses Fahrzeugs trennt, **dadurch gekennzeichnet, dass** es die folgenden Schritte aufweist:
- es wird eine Steuerstange (1) des Servomotors (S) in zwei Teilen (2 und 3) hergestellt, die dazu bestimmt sind, starr ineinander gehalten zu werden,
- ein erster Teil (2) der Steuerstange (1) wird in den Servomotor vor der Befestigung des Servomotors an der Rückwand eingeführt,
- ein zweiter Teil (3) der Steuerstange (1) wird in den ersten Teil (2) der Steuerstange ausgehend vom Fahrzeuginnenraum eingeführt.

14. Verfahren nach Anspruch 13, **dadurch gekennzeichnet, dass** es einen Schritt aufweist, in dem
- der zweite Teil (3) der Steuerstange vorher an einem Bremspedal im Fahrzeuginnenraum befestigt wird.
